# EUROPEAN PATENT SPECIFICATION

(11) **EP 2 036 244 B1**
(45) Date of publication and mention of the grant of the patent: **21.08.2019**
(21) Application number: 07812308.0
(22) Date of filing: 26.06.2007
(51) Int. Cl.: H04L 9/32, H04L 9/00, G06F 12/14, G06K 9/00, H04K 1/00, G06F 7/04, G06F 11/30, H03M 1/68, H04N 7/16

(54) **SYSTEMS AND METHODS FOR A SECURE RECORDING ENVIRONMENT**
SYSTEME UND VERFAHREN FÜR EINE AUFZEICHNUNGSUMGEBUNG
PROCÉDÉS ET SYSTÈMES POUR UN ENVIRONNEMENT D'ENREGISTREMENT SÉCURISÉ

(30) Priority: 30.06.2006 US 479841; 30.06.2006 US 479926; 30.06.2006 US 479925
(43) Date of publication of application: 18.03.2009
(73) Proprietor: Verint Americas Inc., Melville NY 11747 (US)
(72) Inventor: WATSON, Joe, Alpharetta, GA 30004 (US); SMITH, Damian, Alpharetta, GA 30005 (US); WILLIAMS, Jamie, Richard, Fleet, Hampshire GU51 1EG (GB); DONG, Thomas, Marietta, GA 30062 (US); CALAHAN, Marc, Woodstock, GA 30180 (US)
(74) Representative: Goddard, Frances Anna
(86) International application number: PCT/US2007/072066
(87) International publication number: WO 2008/005741

(56) References cited:
- US-A1- 2002 144 116
- US-A1- 2003 093 533
- US-A1- 2004 131 161
- US-A1- 2005 144 459
- US-B1- 6 529 602

## Description

### TECHNICAL FIELD

The present disclosure is generally related to methods and systems that provide secure, captured data in a customer center.

### BACKGROUND

Security is fast becoming a primary concern as private information is communicated during interactions between a customer and a business, particularly at a customer center. Some interactions are captured and stored in a recording system for evaluation of an agent and visualization of performance of the customer center, for example. Some captured interactions have private information such as credit card information, social security number, and date of birth. Clearly, this type of information could be subject to identity theft and unlawful access. US 2004/131161 discloses a method of recording, archiving and delivering telephonic communications through a centralized archiving facility. The method includes invoking an archive / recording process, encrypting the content of the communication in response to a determination that encryption is required, and storing the encrypted communication. US 6 529 602 discloses a method for recording audio conversations such that the content and the time of the conversations can be authenticated. US 2003/0093533 discloses a network-based call-centre system that copies sensitive information to a database an a private network behind a firewall and then deletes the data from the external resource.

### SUMMARY

Systems and methods are disclosed for providing secure, captured data in a customer center. The present invention is defined by the appended claims. In one embodiment, the method comprises: capturing data with a recording system; receiving a request to retrieve electronic keys for encrypting the data; responsive to receiving the request, transmitting the electronic keys to the recording system; encrypting the data using the electronic keys; associating the electronic keys with the encrypted data; and storing the encrypted data in the recording system.

Systems and methods are disclosed for retrieving and playing back a secure, captured data in a customer center. In another embodiment, the method comprises:
transmitting a request by a retrieval component to retrieve stored, encrypted data from a recording subsystem; establishing a secure communication between the retrieval component and the recording subsystem to retrieve the stored, encrypted data;
receiving the stored, encrypted data by the retrieval component; transmitting a request to retrieve electronic keys for decrypting the stored, encrypted data; receiving the electronic keys by the retrieval component; decrypting the stored, encrypted data using the electronic keys; and playing back the decrypted data.

In another embodiment, the method comprises: capturing data with a recording system; receiving a request to retrieve electronic keys for encrypting the data; responsive to receiving the request, transmitting the electronic keys to the recording system; encrypting the data using the electronic keys; associating the electronic keys with the encrypted data; and storing the encrypted data in the recording system.

In another embodiment, the method comprises: transmitting a request by a retrieval component to retrieve stored, encrypted data from a recording subsystem; establishing a secure communication between the retrieval component and the recording subsystem to retrieve the stored, encrypted data; receiving the stored, encrypted data by the retrieval component; transmitting a request to retrieve electronic keys for decrypting the stored, encrypted data; receiving the electronic keys by the retrieval component; decrypting the stored, encrypted data using the electronic keys; and playing back the decrypted data.

In another embodiment, the method comprises: capturing data with a recording system; receiving a request to retrieve electronic keys for encrypting the data; responsive to receiving the request, transmitting the electronic keys to the recording system; encrypting the data using the electronic keys; associating the electronic keys with the encrypted data; and storing the encrypted data in the recording system.

In another embodiment, the method comprises: transmitting a request by a retrieval component to retrieve stored, encrypted data from a recording subsystem; establishing a secure communication between the retrieval component and the recording subsystem to retrieve the stored, encrypted data; receiving the stored, encrypted data by the retrieval component; transmitting a request to retrieve electronic keys for decrypting the stored, encrypted data; receiving the electronic keys by the retrieval component; decrypting the stored, encrypted data using the electronic keys; and playing back the decrypted data.

In another embodiment, the method comprises the steps of: establishing a secure communication over a network between the key management system and a retrieval component; transmitting a duplicate copy of at least one electronic key to a cache that is electrically coupled to the retrieval component; receiving a request to retrieve the electronic keys; and transmitting the retrieved electronic keys for decrypting the stored data.

### BRIEF DESCRIPTION OF THE DRAWINGS

Many aspects of the invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.
FIG. 1 is a schematic diagram of an embodiment of an encrypted recording environment using a centralized key management system in a company premises.
FIG. 2 is a schematic diagram of an embodiment of an encrypted recording environment using a local key management system of a recording system.
FIG. 3 illustrates an exemplary database of electronic keys.
FIG. 4 illustrates an exemplary database of stored data and metadata associated with the stored data.
FIG. 5 is a flow diagram that illustrates operation of an embodiment of an encrypted recording environment such as shown in FIGs. 1 and 2.
FIGs. 6A-B are flow diagrams that illustrate operation of an embodiment of an encrypted recording system environment, such as shown in FIGs. 1 and 2.
FIG. 7 is a flow diagram that illustrates operation of an embodiment of a key management system.
FIG. 8 is a flow diagram that illustrates operation of an embodiment of a cache.
FIG. 9 is a flow diagram that illustrates operation of an embodiment of a recording subsystem.
FIG. 10 is a flow diagram that illustrates operation of an embodiment of a playback component.

### DETAILED DESCRIPTION

Disclosed herein are systems and methods for providing secure, captured data in a customer center. Customer center includes, but is not limited to, outsourced contact centers, outsourced customer relationship management, customer relationship management, voice of the customer, customer interaction, contact center, multi-media contact center, remote office, distributed enterprise, work-at-home agents, remote agents, branch office, back office, performance optimization, workforce optimization, hosted contact centers, and speech analytics, for example. In particular, embodiments of such a system incorporate a key management system, which can be located at the customer center, that provides secure, captured data during collection, recording and transmission of the captured data. The key management system provides electronic keys for encrypting and decrypting data. By encrypting the data, even if a hacker breaks through all other protection mechanisms (e.g., firewalls) and gains access to encrypted data, the hacker is prevented from being able to read the data without further breaking the encryption.

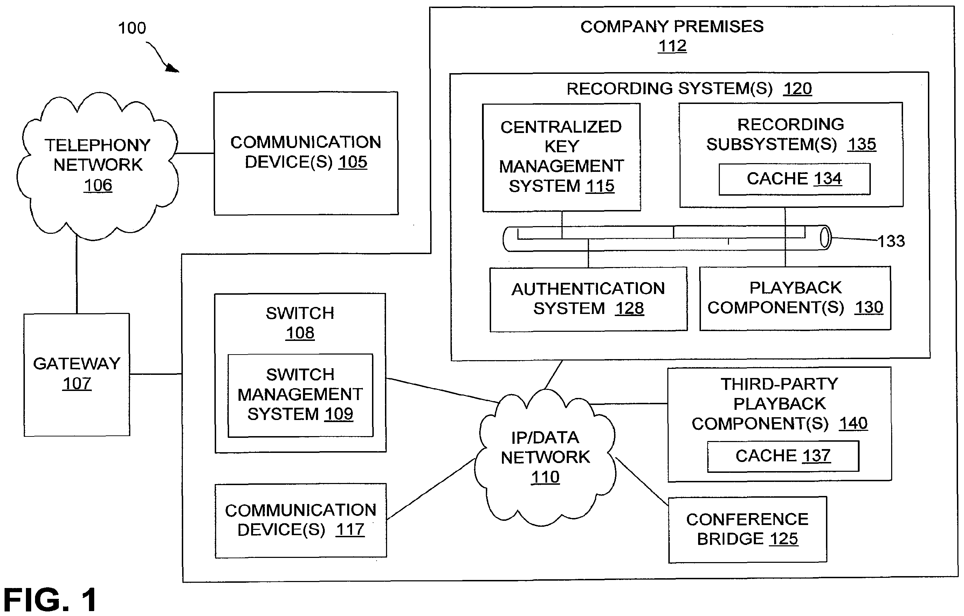

FIG. 1 is a schematic diagram of an embodiment of an encrypted recording environment 100 using a centralized key management system in a company premises. Communication device 105 is coupled to a telephone network 106, which is coupled to a gateway 107. The gateway 107 is coupled to a company premises 112, particularly to a switch 108. The switch 108 can be a voice over Internet Protocol (VoIP) switch and includes a switch management system 109 that encrypts data from an interaction between, for example, users of communication device 105 and communication device 117 or users of the communication devices 117. The switch management system 109 associates electronic keys with the encrypted data. The switch management system 109 transmits the encrypted data to an IP/data network 110. Additionally or alternatively, the switch 108 can be a time-division multiplexing (TDM) switch, which transmits unencrypted data associated with the interaction.

The communication devices 105, 117 can include, but not limited to, an Internet Protocol (IP) soft phone, a TDM phone, and a computing device. The communication device 117 can communicate with the communication devices 105 or other communication devices 117 via the IP/data network 110 and switch 108. If the communication devices are IP soft phones or computing devices, the communication devices 105, 117 can decrypt incoming data from the switch 108 and transmits outgoing data to the switch 108.

Additionally or alternatively, the communication device 117 can encrypt its outgoing data and transmit the outgoing data to the switch 108. The switch 108 decrypts the outgoing data for the communication device 105. The encryption of the data at the switch 108 and the communication device 117 provides security to the data of the interactions between users of the communication devices 105, 117 or users of the communication device 117 in the company premises 112.

The switch 108 and/or the communication device 117 transmit encrypted or unencrypted data to one or more recording systems 120. The data is related to, but is not limited to, TDM, conferencing, duplicative, and passive, for example. Each recording system 120 includes a centralized key management system 115, one or more recording subsystems, and one or more playback components, all of which are coupled to a network 133. The recording subsystem 135 includes, but is not limited to, an active-recording buffer, an online-network storage, and an archival system, for example. The recording subsystem 135 receives captured data from the switch 108 and/or the communication device 117. The recording subsystem 135 further receives metadata that includes information related to the interaction, such as agent identification and call time, for example. In general, the metadata is transmitted with the data to the recording subsystem 135. In this regard, "data" includes metadata of an interaction along with the captured audio, video, screen capture, and text messaging signals.

If the data are encrypted, the recording subsystem 135 decrypts the data from the switch 108 and/or the communication device 117 using electronic keys from the switch 108 and/or the communication device 117, respectively. Either the recording subsystem 135 decrypts the data or receives unencrypted data, the recording subsystem 135 then transmits a request to the centralized key management system 115 for an electronic key to encrypt the data. The recording subsystem 135 generates a unique identifier, which can be calculated based on a checksum or hash value of the data, for example. The recording subsystem 135 associates the unique identifier with the captured data. The request can include, but not limited to, unique identifiers associated with the captured data and authentication information.

Unique identifiers are codes used to identify the captured data that are unique within a given context. There are three ways, among others, of generating unique identifiers: 1) serial numbers, allocated in sequence, 2) random numbers selected from a number space much larger than the expected number of objects to be identified, and 3) meaningful names or codes allocated by choice which are forced to be unique by keeping a central registry. All of the above methods can be combined hierarchically, singly or in combination with one another, to create scalable schemes for creating unique identifiers. In many cases, the captured data may have more than one unique identifier, each of which identifies it for a different purpose.

Hash value is computed from a base input number using a hashing algorithm. Essentially, the hash value is a summary of the original value. The hash value is nearly impossible to derive the original input number without knowing the data used to create the hash value.

The centralized key management system 115 receives the request from the recording subsystem 135 and determines whether the recording subsystem 135 has authentication via an authentication system 128 to retrieve electronic keys. The centralized key management system 115 generates electronic keys for decrypting and encrypting data. The electronic keys can be used as active keys, inactive keys, and random, semi-random, and sequential rotations of keys. The centralized key management system 115 can generate key identification associated with the generated electronic keys based on a checksum or hash value of the data.

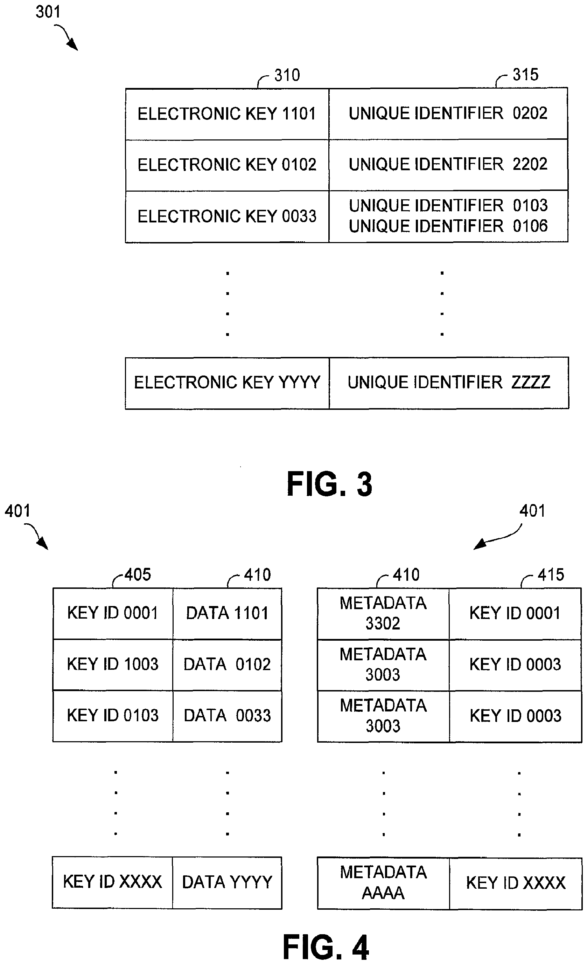

Responsive to the recording subsystem 135 having authentication, the centralized key management system 115 selects an electronic key for encrypting the captured data. The centralized key management system 115 generates a key identification for each electronic key and associates the key identification with the electronic key. Additionally or alternatively, the centralized key management system 115 associates the electronic keys with the unique identifier. The generated keys are maintained until the associated data are removed from the encrypted recording environment 100. The unique identifier can be used to obtain the electronic key from the centralized key management system 115. The structure of the electronic key is described in relation to FIG. 3.

The centralized key management system 115 transmits the electronic keys to the recording subsystem 135. The recording subsystem 135 receives the electronic keys and encrypts the captured data using the electronic keys. Alternatively or additionally, the recording subsystem 135 can associate the key identification with the encrypted data. The key identification can be used to obtain the electronic key from the centralized key management system 115. The encrypted data are stored in the recording subsystem 135. Additionally or alternatively, the recording subsystem includes 135 a database of metadata and key identifications. The recording subsystem 135 uses the metadata to retrieve the stored, encrypted data. The metadata is associated with the key identifications, which the recording subsystem 135 uses to retrieve the electronic keys from the centralized key management system 115. The structures of the encrypted data and metadata are described in relation to FIG. 4.

Additionally or alternatively, the centralized key management system 115 can transmit the electronic keys maintained in the centralized key management system 115 to a cache 134 located in the recording subsystem 135. The cache 134 is a secure nonvolatile component. The cache 134 can store active keys and inactive keys. The keys stored in the cache 134 can be updated via the centralized key management system 115. The cache 134 can be receive a request for the electronic key from a retrieval system, such as the recording subsystem 135, the playback component 130, or a third party playback component 140. The request includes a unique identifier associated with the data and/or key identification associated with the electronic key. The cache 134 uses the unique identifier and/or key identification to provide the electronic keys to the retrieval system. The cache 134 transmits the electronic key via the network 133 and/or IP/data network 110. The encryption of the data by the recording subsystem 135 provides security during the transmission and storage of the data in the recording system 120. The retrieval process of the electronic keys allows the encrypted data to migrate to different retrieval systems using the associated electronic keys for decrypting the data.

There are various encryption methods. For example, in symmetric-key encryption, each computer has a secret key (code) that the computer use to encrypt a packet of information before the packet is sent over the network to another computer. Symmetric-keys are installed into computers that communicate with each other. Symmetric-key encryption is essentially the same as a secret code that each computer knows to decode the information. The code provides the key for decoding the message. An analogy of the encryption is that a first person creates a coded message and sends the message to a second person. To decrypt the message, each letter is substituted with the letter that is two down from it in the alphabet. So "A" becomes "C," and "B" becomes "D". The second person knows the encryption method that the code is "Shift by 2". The second person receives the message and decodes it. Anyone else who sees the message will see only nonsense.

Another encryption method is public-key encryption that uses a combination of a private key and a public key. Each private key is assigned to a first computer, while the public key is given by the first computer to any other computers that wants to communicate securely with the first computer. To decode an encrypted message, the other computers use the public key, provided by the first computer, and their own private keys. One public-key encryption utility is called Pretty Good Privacy (PGP).

Public-key encryption takes a lot of computing, so many systems use a combination of public-key and symmetry-key encryption. When two computers initiate a secure session, one computer creates a symmetric key and sends it to the other computer using public-key encryption. The two computers can then communicate using symmetric-key encryption. Once the session is finished, each computer discards the symmetric key used for that session. Any additional sessions require that a new symmetric key be created, and the process is repeated.

Additionally or alternatively, the recording system 120 encrypts incoming and outgoing data from multiple respective communication devices 117 associated with multiple respective interactions. Additionally or alternatively, the recording system 120 can instruct the communication device 117 to transmit incoming and outgoing data to a conference bridge 125. Responsive to receiving the instruction, the communication device 117 transmits incoming and outgoing data to the conference bridge 125, which duplicates and transmits the data to the recording system 120. In other words, the recording system 120 "observes" the calls/extensions of the interactions via the conference bridge to get a copy of the data. The conference bridge 125 can "camp" on a specific extension if the switch 108 permits and receive the data from the communication device 117 for the interactions as long as the recording system 120 is observing the extension.

Additionally or alternatively, the recording system 120 communicating with a VoIP switch 108 can also get the decryption information for active VoIP streams, which can be used for real-time or post call decryption of the data. Additionally or alternatively, the centralized key management system 115 continues to use associated electronic keys from the switch management system 109 for the transmission and storage of the data in the recording system 120. However, the manufacturer of the switch management system 109 currently discourages the use of this security method because this increases the risk of hackers cracking their security through the centralized key management system 115. Hackers (external and internal to a company) can use vendor default passwords and other vendor default settings to compromise systems. These passwords and settings can be easily discovered in hacker communities and easily determined via public information.

The playback component 130, a third-party playback component 140, or another recording subsystem 135 can retrieve the stored data from the recording subsystem 135. The retrieval components 130, 135, 140 can be, for example, a desktop computer that plays and/or displays audio, video, screen capture, and text messaging data on the speaker and monitor, respectively. Responsive to receiving a request from the retrieval components, an authorization process may be required for the retrieval components 130, 135, 140 before communicating with each other. For example, the recording subsystem 135 determines whether the retrieval components 130, 135, 140 have authentication via the authentication system 128 to receive the requested data. If the retrieval components 130, 135, 140 have authentication, the recording subsystem 135 transmits the stored data to the retrieval components 130, 135, 140. If the retrieval components 130, 140 play back the stored data, the retrieval components 130, 140 can retrieve the electronic keys from the centralized key management system 115 and/or cache 134, 137 using key identification associated with the encrypted data or the unique identifier of the encrypted data that is associated with the electronic key. The retrieval components 130, 140 decrypt the requested data using the associated electronic key and play back the requested data.

Additionally or alternatively, a secure tunnel may be established among the retrieval components before stored data and electronic keys are transmitted and received among the retrieval components. For example, a secure sockets layer (SSL) is a cryptographic protocol which provide secure communications on the network (e.g., Internet) for data, such things as e-mail and internet faxing. The SSL protocol exchanges data. Each data can be optionally compressed, encrypted and packed with a message authentication code (MAC). Each data can have a *content_type* field that specifies which upper level protocol is being used. When the retrieval components 130, 140 connect with the recording subsystem 135 connection, the data level encapsulates another protocol, the handshake protocol, which has the *content_type.*

Several handshake structures are transmitted and received via the network. For example, a *ClientHello* message is transmitted specifying the list of cipher suites, compression methods and the highest protocol version being supported. Random bytes can be transmitted. A *ServerHello* message is received, in which the server chooses the connection parameters from the choices offered by the client earlier. When the connection parameters are known, the retrieval components 130, 135, 140 exchange certificates (depending on the selected public key cipher). These certificates are currently X.509, which is an international Telecommunication union (ITU) standard. The retrieval components 130, 135, 140 can request a certificate from another retrieval component so that the connection can be mutually authenticated, the retrieval components 130, 135, 140 negotiate a common secret called "master secret", possibly using the result of a Diffie-Hellman exchange, or simply encrypting a secret with a public key that is decrypted with the peer's private key. All other key data is derived from this "master secret" (and the client- and server-generated random values), which is passed through a "Pseudo Random Function". Once the retrieval components 130, 135, 140 have authentication, the stored data are secure to be passed among the retrieval components 130, 135, 140.

Additionally or alternatively, the recording subsystem 135 transmits the requested data to the centralized key management system 115 for decryption and instructs the system 115 to transmit the decrypted data to the playback components 130, 140. Additionally or alternatively, the recording subsystem uses the key identification associated with the encrypted data to obtain the electronic key from the cache 134 and transmits the requested data along with the associated electronic key to the retrieval components 130, 135, 140. Additionally or alternatively, the recording subsystem uses the key identification associated with the encrypted data to obtain the electronic key from the cache 134 and transmits the requested data along with the associated electronic key to the retrieval components 130, 135, 140. In the various alternative embodiments mentioned above, the transmission of the data to the playback component 130 from the recording system 120 are secure by providing encrypted data via a secure tunnel or an authentication process.

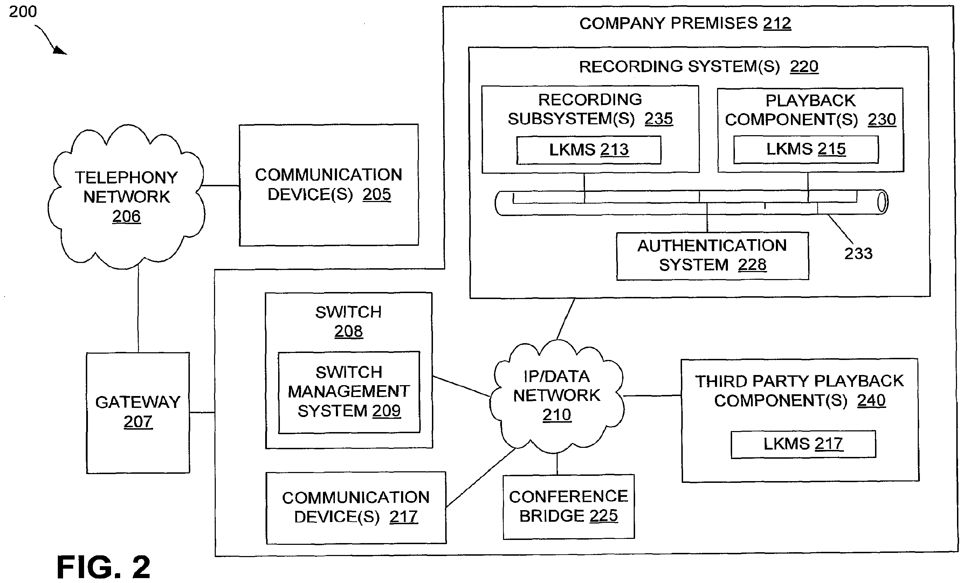

FIG. 2 is a schematic diagram of an embodiment of an encrypted recording environment using a local key management system of a recording system. The encrypted recording environment 200 is similar to the encrypted recording environment 100 in FIG. 1 as described above. That is, system 200 includes communication devices 205, 217, telephony network 206, gateway 207, switch 208, switch management system 209, a company premises 212, IP/data network 210, recording system 220, playback component 230, third-party playback component 240, and authentication system 228.

The company premises 212 receives encrypted or unencrypted data from the switch 208 and/or the communication device 217. The received data are transmitted to the recording subsystem 235, which includes a local key management system (LKMS) 213. Similar to the centralized key management system 115 of FIG. 1, the LKMS 213 provides electronic keys for encrypting the received data. The recording subsystem 235 encrypts the received data using the electronic keys and stores the encrypted data. The LKMS 213 can transmit a duplicate copy of the electronic keys to LKMS 215 and LKMS 217 located in the playback component 230 and third-party playback component 240 via the network 233 and IP/data network 210, respectively. The playback components 230, 240 can transmit a request for the electronic keys to the LKMSs 215, 217 to decrypt the encrypted data.

For example, the recording subsystem 235 encrypts and stores data from the company premises 212 using an electronic key from the LKMS 213. The LKMS 213 communicates with the LKMSs 215, 217 via a secure method. The playback components 230, 240 can retrieve the stored, encrypted data from the recording subsystem 235. In addition, the playback components 230, 240 can retrieve the associated electronic key from the LKMSs 215, 217, respectively, using associated key identifications and/or unique identifiers.

FIG. 3 illustrates an exemplary database of electronic keys. The key management system or cache stores the database 301 of the electronic keys. Each electronic key 310 has a key identification 305 and is associated with at least one unique identifier 315 of the encrypted data. For example, data with unique identifiers 0103 and 0106 can be encrypted and decrypted using the electronic key 0033. Retrieval components can retrieve the electronic keys using the unique identifier.

FIG. 4 illustrates an exemplary database of stored data and metadata associated with the stored data. The recording subsystem stores the database 401 of the stored data. Each stored data 410 has a key identification 405. The recording subsystem can use the key identification to retrieve the electronic key for decryption. Additionally or alternatively, retrieval components can use metadata to retrieve the stored, encrypted data. The metadata is associated with the key identifications, which the retrieval components use to retrieve the electronic keys from the key management system or cache.

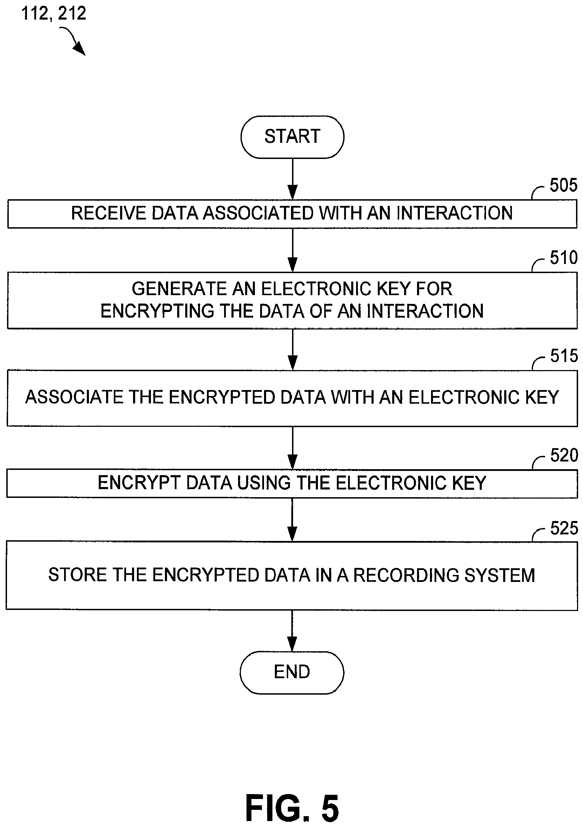

FIG. 5 is a flow diagram that illustrates operation of an embodiment of an encrypted recording environment such as shown in FIGs. 1 and 2. Beginning with block 505, data associated with an interaction are received, such as at a company premises. In block 510, an electronic key is generated for encrypting the data of the interaction. In block 515, the data are associated with the electronic key. In block 520, the data are encrypted using the electronic key. In block 525, the encrypted data are stored in a recording system.

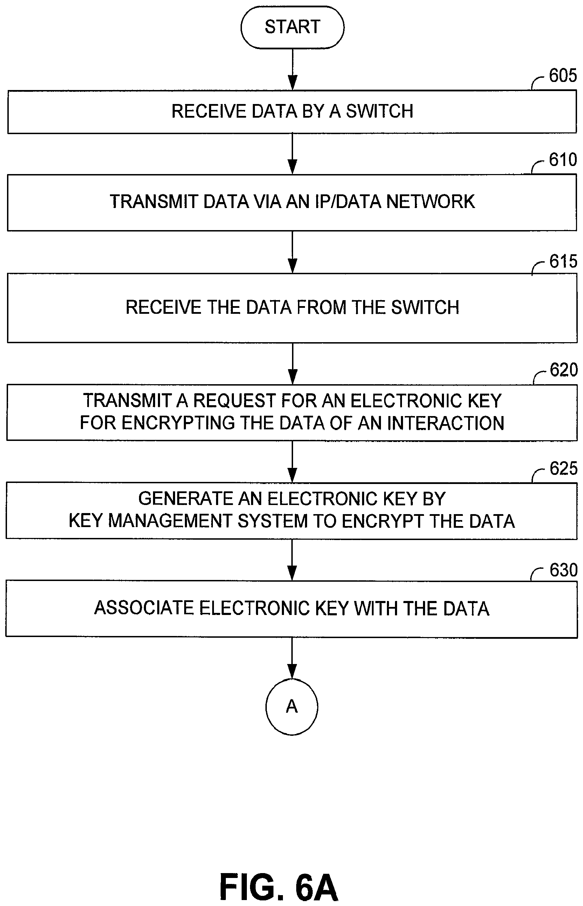

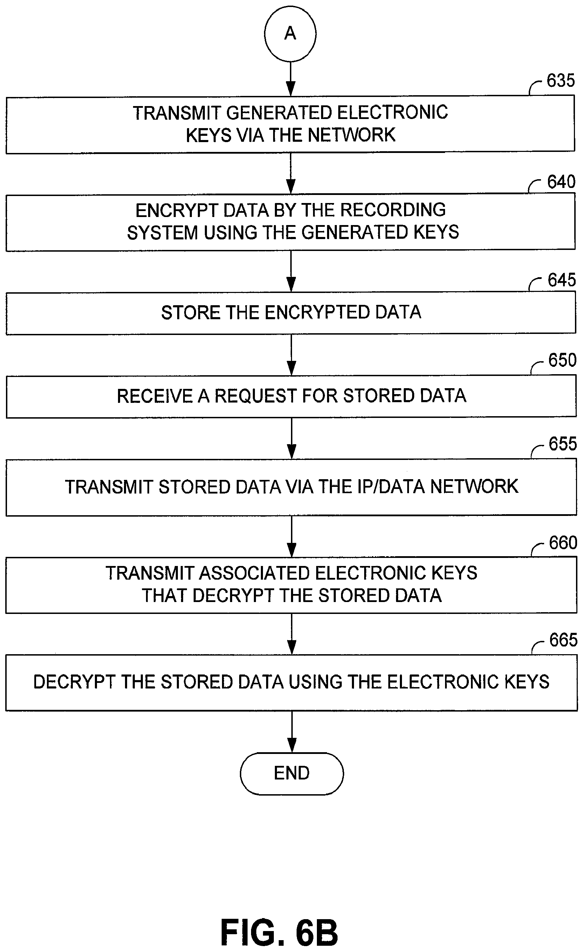

FIGs. 6A-B are flow diagrams that illustrate operation of an embodiment of an encrypted recording system environment, such as shown in FIGs. 1 and 2. In blocks 605 and 610, a switch receives data associated with an interaction and transmits the data via an IP/data network, respectively. In block 615, a recording system receives the data from the switch. In block 620, the recording system transmits a request to a key management system for an electronic key for encrypting the data of an interaction. In block 625, the key management system generates an electronic key to encrypt the data. In block 630, the key management system associates the electronic key with the data. Alternatively or additionally, the request can be transmitted to a cache that provides an electronic key for encryption of the data. As mentioned above, the cache stores a duplicate copy of at least one electronic keys from the key management system.

In block 635, either the key management system or cache transmits generated electronic keys via a network. In block 640, the recording system encrypts the data using the transmitted keys. In some embodiments, the data are encrypted to include the key identifications of the transmitted keys. In block 645, the recording system stores the encrypted data. In block 650, the recording system receives a request for stored data. The recording system can determine whether a retrieval component has authentication to retrieve the stored data. In block 655, responsive to the determining that the retrieval component has authentication, the recording system transmits the stored data via the network. In block 660, the recording system transmits a request to the key management system or cache to retrieve the associated electronic key for decrypting the stored data. The request for decryption includes the key identification or the unique identifier, or both, which the key management system or cache uses to determine the proper electronic key for decryption of the encrypted data. In block 665, the stored data are decrypted using the electronic keys.

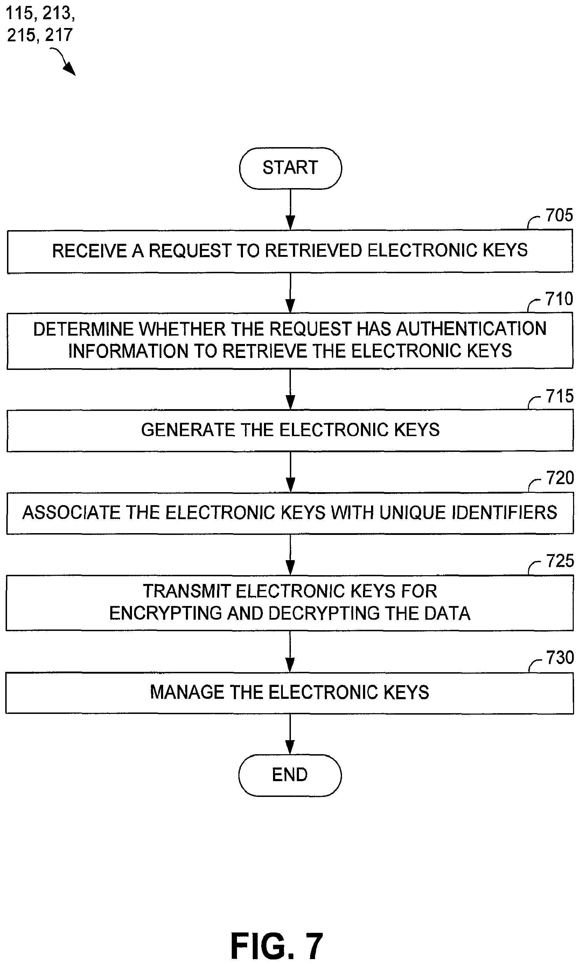

FIG. 7 is a flow diagram that illustrates operation of an embodiment of a key management system. Beginning with block 705, the key management system receives a request to retrieve electronic keys and in block 710, determines whether the request has authentication information to retrieve the electronic keys. In block 715, responsive to determining that the retrieval component has authentication, the key management system generates the electronic keys. Alternatively or additionally, the key management system can maintain a database of electronic keys and select the electronic keys from the database using random, semi-random, and sequential rotation of the electronic keys. Alternatively or additionally, the keys can be active or inactive keys.

In blocks 720 and 725, the key management system associates the generated or selected electronic keys with unique identifiers of the data and transmits the electronic keys for encrypting and decrypting the data, respectively. Alternatively or additionally, the request can include a key identification that the key management system uses to select the electronic key for decryption of the stored data. In block 730, the key management system manages the electronic keys for at least the life of the associated data.

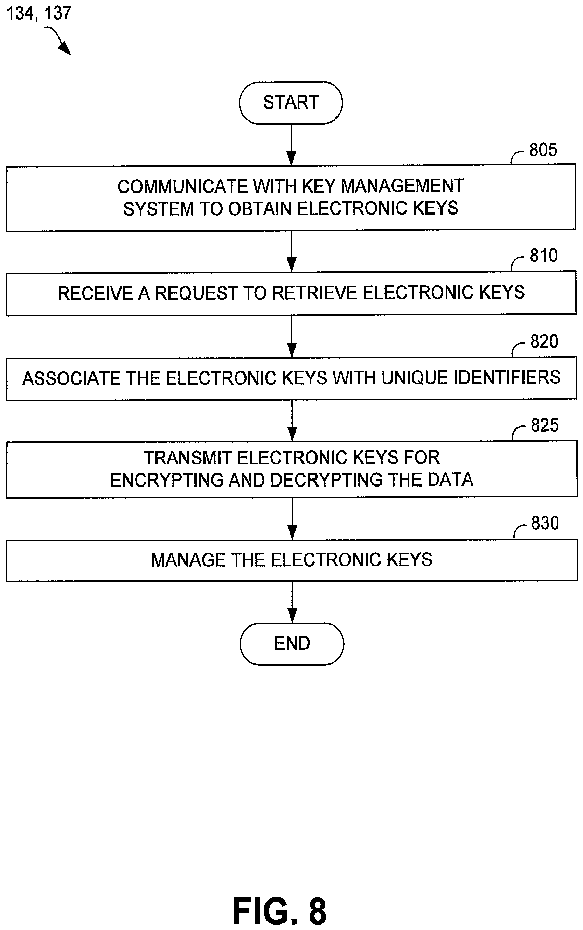

FIG. 8 is a flow diagram that illustrates operation of an embodiment of a cache. In block 805, the cache communicates with a key management system to obtain a duplicate copy of at least one electronic key. In block 810, the cache receives a request to retrieve the electronic keys for encrypting and decrypting data. In block 820, the cache provides an electronic key based on the request. The cache determines whether an electronic key has been associated with the unique identifier. If not, the cache associates an electronic key with the unique identifier, as shown in block 820.

Alternatively or additionally, if a recording subsystem transmits a request for encryption, the cache transmits the electronic key along with the key identification to the retrieval component. The recording subsystem encrypts the data and associates the key identification with the encrypted data. To decrypt the data, the retrieval component can request to the cache for the electronic key that is associated with the key identification and/or the unique identifier. In block 825, the cache transmits the associated electronic keys for encrypting and decrypting the data. In block 830, the cache manages the electronic keys for at least the life of the data.

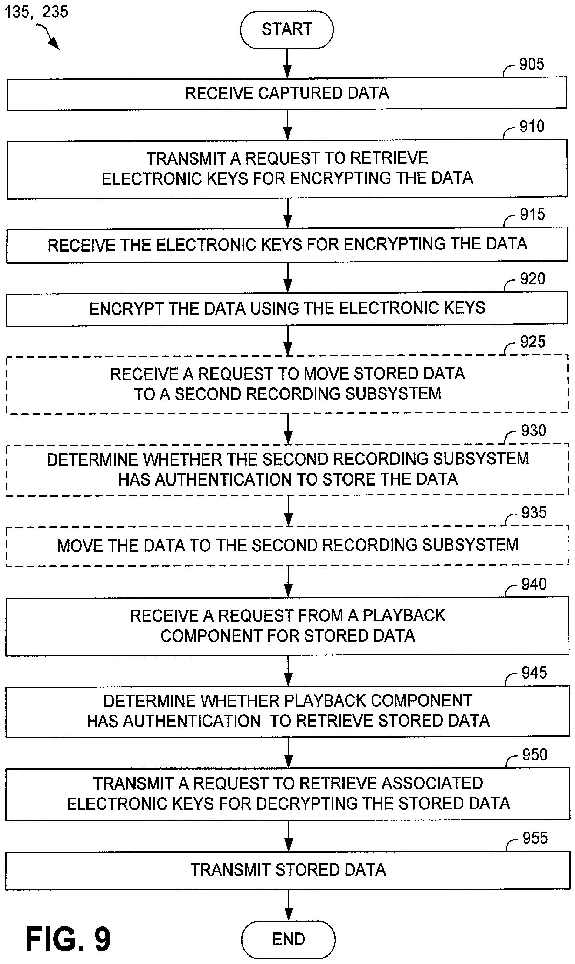

FIG. 9 is a flow diagram that illustrates operation of an embodiment of a recording subsystem. In block 905, the recording subsystem receives captured data. In block 910, the recording subsystem transmits a request to retrieve electronic keys for encrypting the data. In block 915, the recording subsystem receives the electronic keys for encrypting the data. In block 920, the recording subsystem encrypts the data using the electronic keys.

Alternatively or additionally, in blocks 925 and 930, the recording subsystem receives a request to move stored data to a second recording subsystem and determines whether the second recording subsystem has authentication to store the data, respectively. In block 935, the recording subsystem moves the data to the second recording subsystem.

In block 940, both recording subsystems can receive a request from a playback component for the stored data. In block 945, each recording subsystem determines whether the playback component has authentication to retrieve stored data. In block 950, each recording subsystem transmits a request to a key management system or cache to retrieve associated electronic keys for decrypting the stored data. In blocks 955, each recording subsystem transmits stored data.

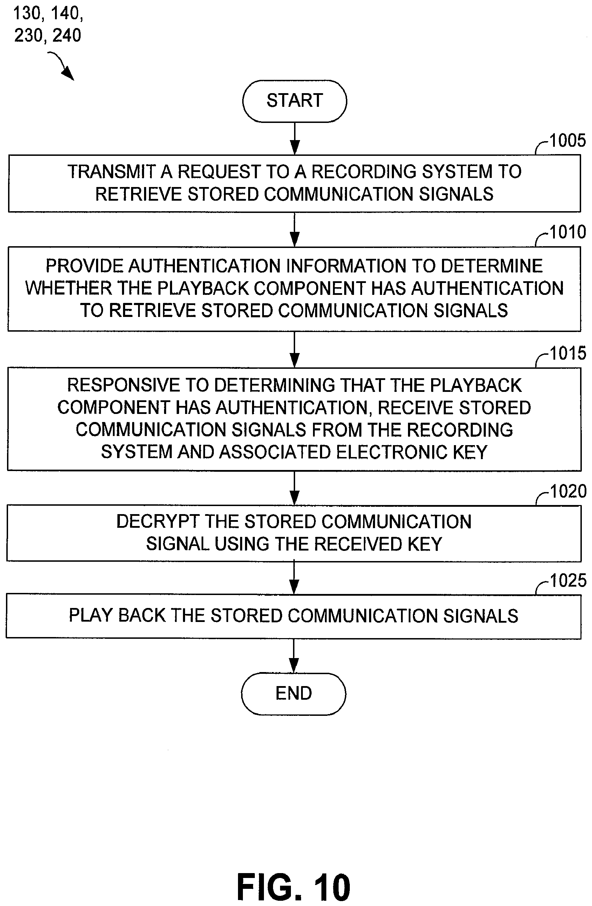

FIG. 10 is a flow diagram that illustrates operation of an embodiment of a playback component. In blocks 1005 and 1010, the playback component transmits a request to a recording system to retrieve stored data and provides authentication information to determine whether the playback component has authentication to retrieve stored data, respectively. In block 1015, responsive to determining that the playback component has authentication, the playback component receives stored data from the recording system and associates electronic key from a key management system or cache. In block 1020, the stored data are decrypted using the received key. In block 1025, the playback component plays back the stored data.

It should be emphasized that the above-described embodiments are merely possible examples of implementations, merely set forth for a clear understanding of principles of the invention. Many variations and modifications may be made to the above-described embodiments. All such modifications and variations are intended to be included herein within the scope of this disclosure and the present invention and protected by the following claims.

## Claims

1. A method for providing secure, captured data in a customer center, comprising the steps of:
capturing unencrypted data with a recording system (120) at a customer center (112) through a VoIP network (110), wherein the unencrypted data comprises a communication between a user and an agent of the customer center;
requesting an electronic encryption key from a key management system (115);
receiving at the recording system (120) the electronic encryption key from the key management system, the electronic encryption key being associated with a key identification;
encrypting the unencrypted data at the recording system (120) using the electronic key to produce encrypted data;
associating metadata of the encrypted data with a key identification at the recording system (120);
associating a unique identifier (315) with the encrypted data;
transmitting the unique identifier associated with the encrypted data to the key management system (115), the unique identifiers being generated from the unencrypted data by recording system (120);
storing the encrypted data in the recording system (120); and
maintaining a database (401) of metadata (410) and key identifications (415) to facilitate retrieval of the electronic keys for decrypting the encrypted data.

2. The method as defined in claim 1, further comprising associating the electronic key with the encrypted data by associating the key identification with the encrypted data.

3. The method as defined in claim 1, wherein the key identification is a hash value on the electronic encryption key.

4. The method as defined in claim 2, wherein associating the electronic encryption key with the encrypted data comprises associating the electronic encryption key with the unique identifier.

5. The method as defined in claim 4, further comprising maintaining a database (301) of electronic keys and unique identifiers to facilitate retrieval of the electronic encryption keys for decrypting the stored encrypted data.

6. The method as defined in claim 1, wherein the unique identifier is a hash value on the electronic encryption key.

7. A recording system (120) for providing secure, unencrypted captured data in a customer center (112) comprising:
a key management system (115) at the customer center (112) operative to:
receive a request to retrieve an electronic encryption key for encrypting the unencrypted data, and responsive to receiving the request, transmit the electronic encryption key ; and
a recording subsystem at the customer center (112) electrically coupled to the key management system (115), the recording subsystem being operative to:
capture unencrypted data within the customer center (112) through a VoIP network (110), wherein the unencrypted data comprises a communication between a user and an agent of the customer center (112),
transmit the request to retrieve the electronic encryption key for encrypting the captured unencrypted data, and responsive to receiving the electronic encryption key, encrypt the captured data using the electronic encryption key,
associate the electronic encryption key with the encrypted data with a key identification,
associate metadata of the encrypted captured data with the key identification;
generate a unique identifier from the unencrypted data;
associate the unique identifier with the encrypted captured data;
store the encrypted data in the recording system (120), and
maintain a database (401) of metadata and key identifications to facilitate retrieval of the electronic keys for decrypting the stored encrypted captured data,
wherein the recording subsystem is further operative to transmit unique identifiers.

8. The recording system (120) as defined in claim 7, wherein the recording subsystem associates electronic keys with the encrypted captured data by associating the key identifications with the stored data.

## Patentansprüche

1. Verfahren zum Bereitstellen von sicheren, erfassten Daten in einem Kundencenter, umfassend die folgenden Schritte:
Erfassen von unverschlüsselten Daten mit einem Aufzeichnungssystem (120) in einem Kundencenter (112) über ein VoIP-Netzwerk (110), wobei die unverschlüsselten Daten eine Kommunikation zwischen einem Benutzer und einem Vertreter des Kundencenters umfassen;
Anfordern eines elektronischen Codierungsschlüssels von einem Schlüsselverwaltungssystem (115);
Empfangen des elektronischen Codierungsschlüssels an dem Aufzeichnungssystem (120) von dem Schlüsselverwaltungssystem, wobei der elektronische Codierungsschlüssel assoziiert ist mit einer Schlüsselidentifikation;
Verschlüsseln der unverschlüsselten Daten an dem Aufzeichnungssystem (120) unter Verwendung des elektronischen Schlüssels zum Erzeugen von verschlüsselten Daten;
Assoziieren von Metadaten der verschlüsselten Daten mit einer Schlüsselidentifikation an dem Aufzeichnungssystem (120);
Assoziieren einer eindeutigen Kennung (315) mit den verschlüsselten Daten;
Übertragen der eindeutigen Kennung, die mit den verschlüsselten Daten assoziiert ist, an das Schlüsselverwaltungssystem (115), wobei die eindeutigen Kennungen durch das Aufzeichnungssystem (120) aus den unverschlüsselten Daten generiert werden;
Speichern der verschlüsselten Daten in dem Aufzeichnungssystem (120); und
Pflegen einer Datenbank (401) mit Metadaten (410) und Schlüsselidentifikationen (415), um das Abrufen der elektronischen Schlüssels zur Entschlüsselung der verschlüsselten Daten zu ermöglichen.

2. Verfahren nach Anspruch 1, ferner umfassend das Assoziieren des elektronischen Schlüssels mit den verschlüsselten Daten durch Assoziieren der Schlüsselidentifikation mit den verschlüsselten Daten.

3. Verfahren nach Anspruch 1, wobei die Schlüsselidentifikation ein Hash-Wert auf dem elektronischen Codierungsschlüssel ist.

4. Verfahren nach Anspruch 2, wobei das Assoziieren des elektronischen Codierungsschlüssels mit den verschlüsselten Daten Assoziieren des elektronischen Codierungsschlüssels mit der eindeutigen Kennung umfasst.

5. Verfahren nach Anspruch 4, ferner umfassend das Pflegen einer Datenbank (301) für elektronische Schlüssels und eindeutige Kennungen, um das Abrufen der elektronischen Codierungsschlüssels zum Entschlüsseln der gespeicherten verschlüsselten Daten zu ermöglichen.

6. Verfahren nach Anspruch 1, wobei die eindeutige Kennung einen Hash-Wert auf dem elektronischen Codierungsschlüssel ist.

7. Aufzeichnungssystem (120) zum Bereitstellen von sicheren, unverschlüsselten erfassten Daten in einem Kundencenter (112), umfassend:
ein Schlüsselverwaltungssystem (115) in dem Kundencenter (112), das zu Folgendem betriebsfähig ist:
Empfangen einer Anforderung zum Abrufen eines elektronischen Codierungsschlüssels zum Verschlüsseln der unverschlüsselten Daten und als Reaktion auf das Empfangen der Anforderung, Übertragen des elektronischen Codierungsschlüssels; und
ein Aufzeichnungsteilsystem in dem Kundencenter (112), das mit dem Schlüsselverwaltungssystem (115) elektronisch gekoppelt ist, wobei das Aufzeichnungsteilsystem zu Folgendem betriebsfähig ist:
Erfassen von unverschlüsselten Daten in dem Kundencenter (112) über ein VoIP-Netzwerk (110), wobei die unverschlüsselten Daten eine Kommunikation zwischen einem Benutzer und einem Vertreter des Kundencenters (112) umfassen;
Übertragen der Anforderung zum Abrufen des elektronischen Codierungsschlüssels zum Verschlüsseln der erfassten unverschlüsselten Daten und als Reaktion auf das Empfangen des elektronischen Codierungsschlüssels, Verschlüsseln der erfassten Daten unter Verwendung des elektronischen Codierungsschlüssels,
Assoziieren des elektronischen Codierungsschlüssels mit den verschlüsselten Daten mit einer Schlüsselidentifikation,
Assoziieren von Metadaten der verschlüsselten erfassten Daten mit einer Schlüsselidentifikation;
Generieren einer eindeutigen Kennung aus den unverschlüsselten Daten;
Assoziieren der eindeutigen Kennung mit den verschlüsselten erfassten Daten;
Speichern der verschlüsselten Daten in dem Aufzeichnungssystem (120), und
Pflegen einer Datenbank (401) mit Metadaten und Schlüsselidentifikationen, um das Abrufen der elektronischen Schlüssels zum Entschlüsseln der gespeicherten verschlüsselten Daten zu ermöglichen,
wobei das Aufzeichnungsteilsystem ferner betriebsfähig ist, um die eindeutigen Kennungen zu übertragen.

8. Aufzeichnungssystem (120) nach Anspruch 7, wobei das Aufzeichnungsteilsystem die elektronischen Schlüssels mit den verschlüsselten erfassten Daten assoziiert, und zwar durch Assoziieren des Schlüsselidentifikationen mit den gespeicherten Daten.

## Revendications

1. Procédé permettant de fournir des données saisies sécurisées dans un centre client, comprenant les étapes :
de saisie de données non cryptées avec un système d'enregistrement (120) dans un centre client (112) via un réseau VoIP (110), dans lequel les données non cryptées comprennent une communication entre un utilisateur et un agent du centre client ;
de demande d'une clé de cryptage électronique à un système de gestion de clé (115) ;
de réception sur le système d'enregistrement (120) de la clé de cryptage électronique provenant du système de gestion de clé, la clé de cryptage électronique étant associée à une identification de clé ;
de cryptage des données non cryptées sur le système d'enregistrement (120) en utilisant la clé électronique pour produire des données cryptées ;
d'association de métadonnées des données cryptées avec une identification de clé au niveau du système d'enregistrement (120) ;
d'association d'un identifiant unique (315) aux données cryptées ;
de transmission de l'identifiant unique associé aux données cryptées au système de gestion de clé (115), les identifiants uniques étant générés à partir des données non cryptées par le système d'enregistrement (120) ;
de stockage des données cryptées dans le système d'enregistrement (120) ; et
de tenue à jour d'une base de données (401) de métadonnées (410) et d'identifications de clé (415) afin de faciliter la récupération des clés électroniques pour décrypter les données cryptées.

2. Procédé selon la revendication 1, comprenant en outre l'association de la clé électronique aux données cryptées en associant l'identification de clé aux données cryptées.

3. Procédé selon la revendication 1, dans lequel l'identification de clé est une valeur de hachage sur la clé de cryptage électronique.

4. Procédé selon la revendication 2, dans lequel l'association de la clé de cryptage électronique aux données cryptées comprend l'association de la clé de cryptage électronique à l'identifiant unique.

5. Procédé selon la revendication 4, comprenant en outre la tenue à jour d'une base de données (301) de clés électroniques et d'identifiants uniques afin de faciliter la récupération des clés de cryptage électronique pour décrypter les données cryptées stockées.

6. Procédé selon la revendication 1, dans lequel l'identifiant unique est une valeur de hachage sur la clé de cryptage électronique.

7. Système d'enregistrement (120) permettant de fournir des données saisies non cryptées sécurisées dans un centre client (112) comprenant :
un système de gestion de clé (115) dans le centre client (112) utilisé pour :
recevoir une demande de récupération d'une clé de cryptage électronique pour crypter les données non cryptées, et en réponse à la réception de la demande, transmettre la clé de cryptage électronique ; et
un sous-système d'enregistrement dans le centre client (112) couplé électriquement au système de gestion de clé (115), le sous-système d'enregistrement étant utilisé pour :
saisir des données non cryptées dans le centre client (112) via un réseau VoIP (110), dans lequel les données non cryptées comprennent une communication entre un utilisateur et un agent du centre client (112),
transmettre la demande de récupération de la clé de cryptage électronique pour crypter les données non cryptées saisies, et en réponse à la réception de la clé de cryptage électronique, crypter les données saisies en utilisant la clé de cryptage électronique,
associer la clé de cryptage électronique aux données cryptées avec une identification de clé,
associer des métadonnées des données saisies cryptées à l'identification de clé ;
générer un identifiant unique à partir des données non cryptées ;
associer l'identifiant unique aux données saisies cryptées ;
stocker les données cryptées dans le système d'enregistrement (120), et
tenir à jour une base de données (401) de métadonnées et d'identifications de clé afin de faciliter la récupération des clés électroniques pour décrypter les données saisies cryptées stockées,
dans lequel le sous-système d'enregistrement est en outre utilisé pour transmettre des identifiants uniques.

8. Système d'enregistrement (120) selon la revendication 7, dans lequel le sous-système d'enregistrement associe des clés électroniques aux données saisies cryptées en associant les identifications de clé aux données stockées.
